Europäisches Patentamt

European Patent Office

Office européen des brevets

(19)

(11) Veröffentlichungsnummer: **0 144 970**

**A2**

(12) # EUROPÄISCHE PATENTANMELDUNG

(21) Anmeldenummer: **84114774.7**

(22) Anmeldetag: **05.12.84**

(51) Int. Cl.⁴: **B 60 N 1/00**

(30) Priorität: **09.12.83 US 559661**

(43) Veröffentlichungstag der Anmeldung:
**19.06.85 Patentblatt 85/25**

(84) Benannte Vertragsstaaten:
**DE FR GB**

(71) Anmelder. **DEERE & COMPANY**
**1 John Deere Road**
**Moline Illinois 61265(US)**

(72) Erfinder: **Brautigam, Peter Frank**
**8458 Highway HH**
**Kewaskum Wisconsin 53040(US)**

(74) Vertreter: **Feldmann, Bernhard et al,**
**DEERE & COMPANY European Office, Patent**
**Department Steubenstrasse 36-42 Postfach 503**
**D-6800 Mannheim 1(DE)**

(54) **Haltevorrichtung für einen Schwenkteil.**

(57) Eine Haltevorrichtung eines auf einer Plattform (16) aufgebauten Sitzes (14), der gemeinsam mit der Plattform (16) gegenüber einem Fahrzeugrahmen (12) aus einer Betriebsstellung in eine Wartungsstellung schwenkbar ist, weist eine vorgespannte Rasten-Klinke-Verbindung bestehend aus einer Strebe und einem mit Rasterstellungen (30) versehenen Führungsschlitz (28) auf, so daß die Plattform (16) mit dem Sitz (14) in einer Vielzahl von Stellungen, die jeweils einer Rasterstellung (30) entsprechen, arretiert werden kann. Ferner ist eine vom Sitz (14) aus bedienbare Lösevorrichtung (46) vorgesehen, mit deren Hilfe die Strebe (32) außer Eingriff mit der jeweiligen Rasterstellung (30) gebracht werden kann.

EP 0 144 970 A2

./...

Fig. 1

## Haltevorrichtung für einen Schwenkteil

Die Erfindung betrifft eine Haltevorrichtung für einen an einem Fahrzeug angeordneten Schwenkteil mit einer Profilbahn und einer einenends schwenkbar gelagerten Strebe, die anderenends in der Profilbahn geführt und festlegbar ist.

Eine derartige Haltevorrichtung (US-A-4 025 108) ist bekannt, um einen Fahrzeugsitz in einer Wartungsstellung zu halten, in der dieser nach oben geklappt ist. Der Fahrzeugsitz ist auf eine Plattform aufgesetzt, die um quer zur Sitzrichtung und horizontal angeordnete Gelenkachsen an einem Rahmen nach oben und dabei nach hinten aus einer Betriebsstellung wegschwenkbar ist. Die Plattform ist mit einer Verriegelungsvorrichtung versehen, die ein ungewolltes Hochschwenken der Plattform mit dem Sitz aus der Betriebsstellung so lange verhindert, als sie nicht gelöst worden ist. In eine vertikal ausgerichtete und mit der Plattform verbundene Seitenfläche ist eine Profilbahn in der Form eines Führungsschlitzes eingebracht, die in sich ein Ende einer Strebe gleitend aufnimmt, während das andere Ende der Strebe schwenkbar an dem Rahmen angreift. Der Führungsschlitz verläuft in seinem Endbereich U-förmig und nimmt in diesem Endbereich formschlüssig das dem Führungsschlitz zugeordnete Ende der Strebe auf, wenn die Plattform ganz nach oben in ihre Wartungsstellung geschwenkt worden ist. Während des Schwenkvorganges kann dieses Ende über die gesamte Länge des Führungsschlitzes ungehindert gleiten.

Diese bekannte Haltevorrichtung weist den Nachteil auf, daß die Plattform mit dem Sitz stets entweder in die Wartungs- oder in die Betriebsstellung gebracht werden muß, um festzuliegen. Kann jedoch eine Bedienungsperson während des Schwenkens der Plattform zwischen der Wartungs- und der Bedienungsstellung die Plattform nicht mehr halten, dann wird diese auf den Rahmen aufschlagen und dabei die Bedienungsperson gegebenenfalls verletzen.

Die der Erfindung zugrunde liegende Aufgabe wird darin gesehen, die Haltevorrichtung in einer Weise zu verbessern, daß ein ungehindertes Herabfallen der Plattform bzw. eines schwenkbaren Teiles überhaupt vermieden wird.

Diese Aufgabe ist erfindungsgemäß dadurch gelöst worden, daß die Profilbahn mehrere Rasterstellungen aufweist und die Strebe stets in Richtung auf eine der Rasterstellungen hin gedrängt wird.

Auf diese Weise kann der Schwenkteil, beispielsweise die Plattform, ein Fahrzeugsitz, ein Behälter oder eine Abdeckung, in mehreren Stellungen zwischen der Wartungs- und der Betriebsstellung durch das selbsttätige Einrasten der Strebe in eine der Rasterstellungen anhalten und fällt nicht ungehindert über den gesamten Schwenkbereich, wenn er von der Bedienungsperson unbeabsichtigt losgelassen wird. Je nach den Einsatzverhältnissen der Haltevorrichtung kann es ausreichen, wenn nur eine weitere Stellung zwischen der Wartungs- und der Betriebsstellung vorgesehen ist, während bei Schwenkteilen mit einer großen Bewegungsenergie neun oder mehr weitere Stellungen sinnvoll sind. Es besteht eine Vielzahl von Möglichkeiten, die Strebe in Richtung auf die Rasterstellungen hin zu drängen, etwa mittels der Schwerkraft, mittels eines Magneten, mittels eines Teils oder einer Schnur, die von einem Gewicht unter Spannung gehalten werden, wobei nach einer weiteren Ausgestaltung der Erfindung zwischen der Strebe und dem Schwenkteil oder dem Fahrzeug ein Zugmittel derart angeordnet ist, daß die Strebe zu den Rasterstellungen hin bewegt wird. Dieses Zugmittel könnte etwa eine Feder oder ein Gummiband sein.

In weiterer Fortentwicklung der Erfindung ist vorteilhafterweise vorgesehen, daß die Strebe wahlweise über eine Lösevorrichtung außer Eingriff mit den Rasterstellungen bringbar ist, so daß der Schwenkteil nicht nur beim Herabfallen gehalten, sondern, sobald die Bedienungsperson diesen wieder fest im Griff hat, nach dem Betätigen der Lösevorrichtung weiter verschwenkt werden kann.

Gemäß einem weiteren erfinderischen Merkmal ist vorgesehen, daß die Lösevorrichtung dem Zugmittel entgegenwirkt, woraus eine Wechselwirkung der auf die Lösevorrichtung einwirkenden Kräfte resultiert, die dazu führt, daß die Strebe immer dann in Richtung auf die Rasterstellungen hin gedrängt wird, wenn die Lösevorrichtung gewollt oder ungewollt nicht betätigt wird.

Ferner wird ein Vorteil darin erblickt, daß einem weiteren erfinderischen Vorschlag zufolge die Lösevorrichtung einen Winkelteil mit zwei Schenkeln und ein Betätigungsglied enthält, wobei das Betätigungsglied an dem einen Schenkel angreift und der andere Schenkel über die Rasterstellungen im Bewegungsbereich der Strebe schwenkbar ist. Eine derart ausgestaltete Lösevorrichtung ist einfach aufgebaut und bedient sich einfacher Hebelgesetze, um die Strebe außer Eingriff mit den Rasterstellungen zu bringen.

Von Nutzen ist dabei ferner, daß der Winkelteil um eine an der Profilbahn angebrachte Achse schwenkbar ist und die Achse und der Winkelteil parallel zu der Profilbahn verlaufen, da sich hieraus eine die Funktionssicherheit gewährleistende Zuordnung der Einzelteile der Lösevorrichtung ergibt.

Ein weiteres Sicherheitsmerkmal wird bei einer Haltevorrichtung für einen einen Sitz aufnehmenden Schwenkteil, der aus einer Betriebsstellung in eine Wartungsstellung bringbar ist, darin erkannt, daß der Schwenkteil an seinem mit Bezug auf die Vorwärtsfahrtrichtung frontseitigen Ende angelenkt ist und in seiner Betriebsstellung die Strebe mit der Profilbahn abdeckt, da eine auf dem in der Betriebsstellung befindlichen Sitz sitzende Bedienungsperson durch das Treten von Pedalen den Sitz nicht verschwenken und mit den Fingern oder Händen in eventuell sich ergebende Quetschstellen zwischen der Profilbahn und der Strebe greifen kann.

Wenn bei einer Haltevorrichtung, deren Profilbahn an dem Schwenkteil angeordnet ist, erfindungsgemäß das Betätigungsglied in einer an dem Schwenkteil angebrachten Führung geführt ist, dann kann die Bedienungsperson den Schwenkteil beim Herablassen mit beiden Händen halten, wobei die eine Hand nur noch zusätzlich das Betätigungsglied bedienen muß.

Ein schnelles Anheben des Schwenkteils in die Wartungsstellung und dessen sicheres Halten in der entgegengesetzten Richtung wird dadurch erreicht, daß sich die Rasterstellungen in einer derartigen Richtung öffnen, daß die Strebe beim Bewegen des Schwenkteils in seine Wartungsstellung über die Rasterstellungen gleitet, während sie beim Bewegen des Schwenkteils aus seiner Wartungsstellung in seine Betriebsstellung in die Rasterstellungen eingreift.

In der Zeichnung ist ein nachfolgend näher beschriebenes Ausführungsbeispiel der Erfindung dargestellt. Es zeigt:

Fig. 1    eine Fahrzeugsitzanordnung in einer angedeuteten Betriebsstellung und in einer Wartungsstellung, jeweils in Seitenansicht,

Fig. 2    die Fahrzeugsitzanordnung nach Fig. 1 im Schnitt gemäß einer Schnittlinie 2 - 2 und der dazugehörigen Pfeile in Fig. 1.

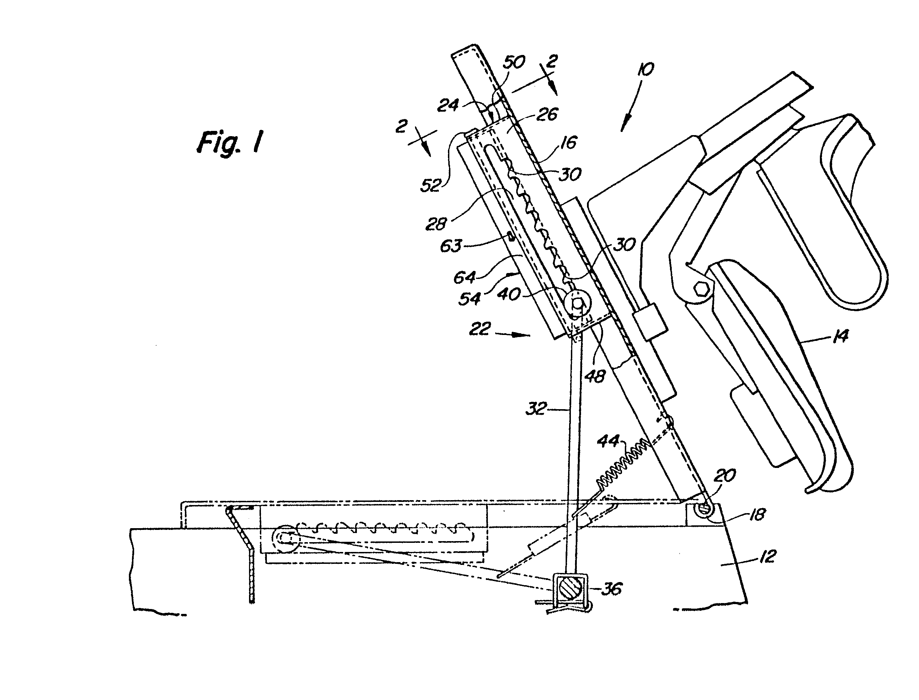

Aus Fig. 1 ist eine Fahrzeugsitzanordnung 10 zu ersehen, die auf einen ein Fahrzeug repräsentierenden Fahrzeugrahmen 12 zum vertikalen Schwenken zwischen einer unten gelegenen Betriebsstellung und einer oben gelegenen Wartungsstellung aufmontiert ist.

Im einzelnen enthält die Fahrzeugsitzanordnung 10 einen profilierten Sitz 14, der auf eine im wesentlichen rechteckige Plattform 16, die generell als Schwenkteil anzusehen ist, aufgesetzt ist, wobei die Plattform 16 einen sich vorne und quer erstreckenden Kantenbereich aufweist, der so geformt ist, daß er einen quer liegenden Hülsenbereich 18 bildet. Im folgenden sollen sich Begriffe wie vorne, hinten und quer stets auf die Vorwärtsfahrtrichtung des Fahrzeuges beziehen, auf das dieser Sitz 14 aufgebaut ist. Demnach liegt mit Bezug auf Fig. 1 vorne rechts, hinten links und quer senkrecht zu der Zeichenebene. Eine Lagerwelle 20 ist an dem Fahrzeugrahmen 12 angebracht und definiert eine horizontal gelegene Querachse, um welche die Fahrzeugsitzanordnung 10 nach oben und vorwärts aus der Betriebsstellung, in der die Plattform 16 im wesentlichen horizontal liegt, in die vollkommen ausgehobene Wartungsstellung schwenkbar ist, in der die Plattform 16 einen Winkel von ca. 65° zu der Horizontalen bildet. Die Betriebsstellung ist in Fig. 1 durch die unterbrochenen und die Wartungsstellung durch die durchgezogenen Linien veranschaulicht. Wenn sich die Plattform 16 in ihrer abgesenkten Stellung befindet, dann bedeckt sie normalerweise verschiedene Fahrzeugkomponenten, die von Zeit zu Zeit eine Wartung oder einen Austausch erfordern. Selbstverständlich muß die Plattform 16 nicht unbedingt mit einem Sitz 14 ausgerüstet sein, sondern sie kann einen Kraftstoff-, Hydraulikflüssigkeits- oder Kühlwasserbehälter tragen, der über einem Motor des Fahrzeuges angeordnet und zu den genannten Zwecken weggeschwenkt wird. Weiterhin könnte anstatt der Fahrzeugsitzanordnung 10 eine Motorhaube oder dergleichen vorgesehen sein.

Die Fahrzeugsitzanordnung 10 enthält eine Haltevorrichtung oder Aufhaltemechanismus 22, der wahlweise die Plattform 16 in ihrer angehobenen Stellung zu halten vermag. Der Aufhaltemechanismus 22 weist einen Längsträger 24 auf, der an einer Unterseite der Plattform 16 angebracht ist. Dieser Längsträger 24 besitzt einen sich längs erstreckenden Flansch 26, der senkrecht zu der Fläche der Plattform 16, an der er befestigt ist, angreift und eine Profilbahn in der Art eines Führungsschlitzes 28 in sich aufweist, der im wesentlichen parallel zu dieser Fläche verläuft. Der Führungsschlitz 28 ist mit einer oberen Kante versehen, die so geformt ist, daß sie eine Vielzahl von sich nach unten und nach vorne öffnenden Rasterstellungen in der Form von Kerben 30 bildet. Weiterhin ist eine Strebe 32 vorgesehen, die durch eine Stange gebildet wird und ein erstes Ende besitzt, das mit einer sich horizontal und quer erstreckenden Lagerwelle 36 verbunden ist, die schwenkbar an dem Fahrzeugrahmen 12 an einer Stelle, die rückwärtig und unterhalb der Lagerwelle 20 liegt, angebracht ist. Die Strebe 32 enthält ferner einen geraden mittleren Teil, der senkrecht, d. h. radial, zu der Lagerwelle 36 ausgerichtet ist, und sie endet in einem quer gebogenen Ende 38, das von dem Führungsschlitz 28 aufgenommen wird. Zwei Scheiben 40 werden auf dem gebogenen oder gekröpften Ende 38 gehalten und bewahren das Ende 38 vor einer Seitwärtsbewegung gegenüber dem Führungsschlitz 28. Dabei ist eine der Scheiben 40 derart auf das Ende 38 aufgesetzt und mit diesem punktverschweißt, daß sie an einer Innenfläche des Flansches 26 leicht anliegt, während die andere Scheibe 40 so auf dem Ende 38 mit einem Splint 42 gehalten wird, daß sie an einer Außenseite des Flansches 26 entlanggleiten kann. Eine als Zugmittel wirkende Schraubenspannfeder 44 ist zwischen der Plattform 16 und der Strebe 32 eingehängt und dient dazu, die Strebe 32 im Uhrzeigerdrehsinn mit Blick auf Fig. 1 vorzuspannen, um das Ende 38 der Strebe 32 in Eingriff mit einer der Kerben 30 zu drängen. Beispielsweise wird, wenn sich die Plattform 16 in ihrer vollkommen angehobenen Stellung, also in ihrer Wartungsstellung, befindet, wie sie in Fig. 1 mit den durchgezogenen Linien angegeben ist, das Ende 38 der Strebe 32 in Eingriff mit der vordersten bzw. mit der untersten der Kerben 30 gedrängt.

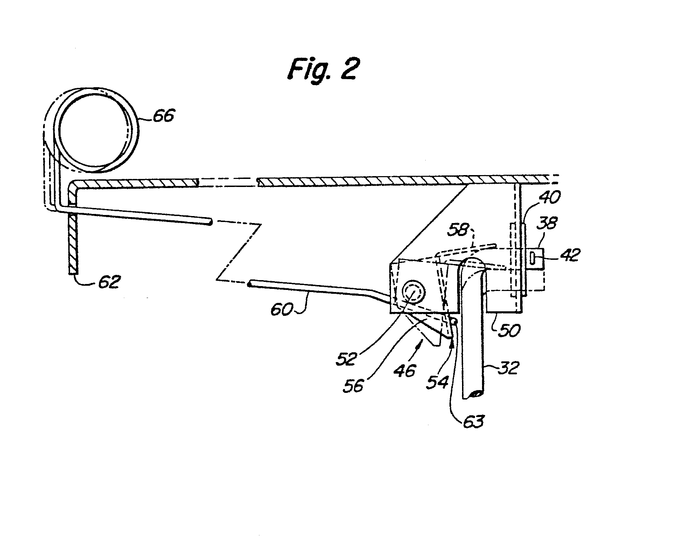

Der Aufhaltemechanismus 22 enthält eine Lösevorrichtung oder Lösemechanismus 46 zum wahlweisen Außer-Eingriff-Bringen des Endes 38 der Strebe 32 mit den Kerben 30. Bei diesem Ausführungsbeispiel enthält der Längsträger 24 sich gegenüberliegende, quer ausgerichtete Enden 48 und 50, die von der Plattform 16 nach unten abstehen und einen sich längs erstreckenden, eine Achse definierenden Bolzen 52 in sich aufnehmen. Ein als Winkelteil ausgebildetes Löseblech 54 von L-förmigem Querschnitt erstreckt sich zwischen den Enden 48 und 50 des Längsträgers 24 und trägt ein Paar von einen Abstand zueinander aufweisenden Laschen 56, welche axial fluchtende Öffnungen aufweisen, in denen der Bolzen 52 aufgenommen ist. Das Löseblech 54 enthält einen Schenkel 58, der an dem Ende 38 der Strebe 32 angreift und derart ausgerichtet ist, daß er die Strebe 32 entgegen der Wirkung der Schraubenspannfeder 44 verschwenkt und somit das Ende 38 aus der gerade eingenommenen Kerbe 30 herausdrängt, wenn das Löseblech 54 im Uhrzeigerdrehsinn um den Bolzen 52 mit Blick auf Fig. 2 schwenkt. Eine allgemein als Betätigungsglied bezeichnete Lösestange 60 ist beweglich in einem von der Plattform 16 nach unten abstehenden und eine Führung bildenden Seitenflansch 62 aufgenommen und besitzt ein Ende 63, das in einen zweiten Schenkel 64 des Lösebleches 54 eingehängt ist. Ein freies Ende der Lösestange 60 ist außerhalb der Plattform 16 untergebracht und ist gewunden, um einen Fingergriff 66 zu bilden. Durch Ziehen der Lösestange 60 in Fig. 2 nach links wird das Löseblech 54 im Uhrzeigerdrehsinn geschwenkt, um das Ende 38 der Strebe 32 außer Eingriff mit einer der ihm zugeordneten Kerben 30 zu bringen.

Die Funktion des Aufhaltemechanismusses 22 kann wie folgt kurzgefaßt erläutert werden. Die Plattform 16 kann durch einfaches Ergreifen und Anheben des rückwärtigen Teiles der Plattform 16 in ihre Außerbetriebsstellung gebracht werden. Die Strebe 32, deren Ende 38 sich während der Betriebsstellung am in Fig. 1 links gelegenen Ende des Führungsschlitzes 28 befindet, wird dabei in dem Führungsschlitz 28 entlang und über die Kerben 30 aufgrund der nach
unten und nach vorne offenen Ausrichtung der Kerben 30 gleiten. Sobald eine gewünschte Stellung der Plattform 16 oder
deren oberste Stellung, also deren Wartungsstellung, erreicht ist, in der das Ende 38 an dem in Fig. 1 unteren
Ende des Führungsschlitzes 28 anliegt, wird die Plattform
16 mit dem Sitz wieder leicht abgesenkt. Die Strebe 32 wird
dann automatisch in die nächstgelegenste bzw. die vorderste
Kerbe 30 aufgrund der Wirkung der Schraubenspannfeder 44 eintreten und die Plattform 16 mit dem Sitz 14 in dieser Stellung halten.

Die Plattform 16 kann danach durch erneutes Ergreifen und
Anheben des rückwärtigen Endes der Plattform 16 in ihre
abgesenkte Stellung gebracht werden, indem zur gleichen
Zeit an der Lösestange 60 gezogen wird, um eine mit Blick
auf Fig. 2 im Uhrzeigerdrehsinn gerichtete Schwenkbewegung
des Lösebleches 54 und damit verbunden eine entgegen dem
Uhrzeigerdrehsinn gerichtete Schwenkbewegung der Strebe 32
entgegen der Wirkung der Schraubenspannfeder 44 zu bewirken.
Durch die im Uhrzeigerdrehsinn gerichtete Schwenkbewegung
des Lösebleches 54 wird das Ende 38 außer Eingriff, d. h.
außer Formschluß, mit der jeweiligen Kerbe 30 gebracht und
gehalten, so daß bei einer Gleitbewegung des Endes 38 in
dem Führungsschlitz 28 dieses nirgends mehr einrasten kann.
In Fig. 2 sind beide Endstellungen des Lösemechanismusses 46
angegeben, wobei das Ende 38 aus den Kerben 30 gedrängt ist,
wenn jeweils in Fig. 2 der Fingergriff 66 seine in unterbrochenen Linien angedeutete und der Schenkel 58 und das
Ende 38 ihre untere Stellung eingenommen haben. Der Übersichtlichkeit wegen sind die Scheiben 40 nur in der Einraststellung des Endes 38 in den Kerben 30 gezeichnet. Die
Plattform 16 kann dann abgelassen werden. Sollte die Bedienungsperson unbeabsichtigt den Halt an der Plattform 16
verlieren, während sie diese absenkt, dann wird die Plattform 16 davor bewahrt herabzufallen, indem man die Lösestange 60 losläßt, woraufhin die Schraubenspannfeder 44 in der Weise wirkt, daß das Ende 38 der Strebe 32 mit der nächstliegenden Kerbe 30 in Eingriff gelangt.

Man wird daher erkennen, daß der Aufhaltemechanismus 22 einen Nutzen bezüglich der Sicherheit erbringt, indem er die Bedienungsperson davor bewahrt, durch eine herabfallende Plattform 16 verletzt zu werden.

Man erkennt ferner, daß der Aufhaltemechanismus 22 nur sehr wenig Raum einnimmt und vollkommen unterhalb der Plattform 16 untergebracht ist, wenn diese sich in ihrer Betriebsstellung befindet.

Patentansprüche

1. Haltevorrichtung (22) für einen an einem Fahrzeug (12) angeordneten Schwenkteil (16) mit einer Profilbahn (28) und einer einenends schwenkbar gelagerten Strebe (32), die anderenends in der Profilbahn (28) geführt und festlegbar ist, dadurch gekennzeichnet, daß die Profilbahn (28) mehrere Rasterstellungen (30) aufweist und die Strebe (32) stets in Richtung auf eine der Rasterstellungen (30) hin gedrängt wird.

2. Haltevorrichtung nach Anspruch 1, dadurch gekennzeichnet, daß zwischen der Strebe (32) und dem Schwenkteil (16) oder dem Fahrzeug (12) ein Zugmittel (44) derart angeordnet ist, daß die Strebe (32) zu den Rasterstellungen (30) hin bewegt wird.

3. Haltevorrichtung nach Anspruch 1 oder 2, dadurch gekennzeichnet, daß die Strebe (32) wahlweise über eine Lösevorrichtung (46) außer Eingriff mit den Rasterstellungen (30) bringbar ist.

4. Haltevorrichtung nach Anspruch 3, dadurch gekennzeichnet, daß die Lösevorrichtung (46) dem Zugmittel (44) entgegenwirkt.

5. Haltevorrichtung nach einem oder mehreren der vorherigen Ansprüche, dadurch gekennzeichnet, daß die Lösevorrichtung (46) einen Winkelteil (54) mit zwei Schenkeln (58, 64) und ein Betätigungsglied (60) enthält, wobei das Betätigungsglied (60) an dem einen Schenkel (64) angreift und der andere Schenkel (58) über die Rasterstellungen (30) im Bewegungsbereich der Strebe (32) schwenkbar ist.

6. Haltevorrichtung nach Anspruch 5, dadurch gekennzeichnet, daß der Winkelteil (54) um eine an der Profilbahn (28) angebrachte Achse (52) schwenkbar ist und die Achse (52) und der Winkelteil (54) parallel zu der Profilbahn (28) verlaufen.

7. Haltevorrichtung nach einem oder mehreren der vorherigen Ansprüche für einen einen Sitz (14) aufnehmenden Schwenkteil (16), der aus einer Betriebsstellung in eine Wartungsstellung bringbar ist, dadurch gekennzeichnet, daß der Schwenkteil (16) an seinem mit Bezug auf die Vorwärtsfahrtrichtung frontseitigen Ende angelenkt ist und in seiner Betriebsstellung die Strebe (32) mit der Profilbahn (28) abdeckt.

8. Haltevorrichtung nach Anspruch 5, wobei die Profilbahn (28) an dem Schwenkteil (16) angeordnet ist, dadurch gekennzeichnet, daß das Betätigungsglied (60) in einer an dem Schwenkteil (16) angebrachten Führung (62) geführt ist.

9. Haltevorrichtung nach einem oder mehreren der vorherigen Ansprüche, dadurch gekennzeichnet, daß sich die Rasterstellungen (30) in einer derartigen Richtung öffnen, daß die Strebe (32) beim Bewegen des Schwenkteils (16) in seine Wartungsstellung über die Rasterstellungen (30) gleitet, während sie beim Bewegen des Schwenkteils (16) aus seiner Wartungsstellung in seine Betriebsstellung in die Rasterstellungen (30) eingreift.

Fig. I

Fig. 2